# EUROPEAN PATENT APPLICATION

(11) **EP 4 726 354 A1**
(43) Date of publication of application: **15.04.2026**
(21) Application number: 24838835.7
(22) Date of filing: 10.07.2024
(51) Int. Cl.: G01N 1/44, G01N 33/531, G05D 23/19

(54) **INCUBATION TRAY AND INCUBATION UNIT USING INCUBATION TRAY**

(30) Priority: 10.07.2023 CN 202321790101 U
(71) Applicant: Chemclin Diagnostics (Shanghai) Co., Ltd., Pudong New Area, Shanghai 200131 (CN); Chemclin Diagnostics (Suzhou) Co., Ltd., Suzhou, Jiangsu 215163 (CN)
(72) Inventor: FANG, Quan, Suzhou, Jiangsu 215163 (CN); LIAN, Zifu, Suzhou, Jiangsu 215163 (CN); LI, Lin, Suzhou, Jiangsu 215163 (CN)
(74) Representative: Huang, Liwei
(86) International application number: PCT/CN2024/104767
(87) International publication number: WO 2025/011583

(57) **Abstract**

The disclosure provides an incubation tray, including: an incubation tray body, a reaction tray assembly, a lower temperature control component, a middle temperature control component, and a processing device. The incubation tray body includes an incubation chamber; the reaction tray assembly is configured to mount a reaction cup and disposed in the incubation chamber; the lower temperature control component is disposed in the incubation chamber and located at a bottom of the incubation tray body, configured to control an overall temperature of the incubation chamber; the middle temperature control component is disposed in the incubation chamber and located between the reaction tray assembly and the lower temperature control component, and the middle temperature control component is disposed adjacent to a lower portion of the reaction tray assembly, configured to control a temperature of the reaction cup mounted in the reaction tray assembly; the processing device is connected to the lower temperature control component and the middle temperature control component. The disclosure further discloses an incubation device adopting the incubation tray.

## Description

### CROSS-REFERENCE TO RELATED APPLICATION

The present application claims the priority to the Chinese patent application No. 202321790101.4, entitled "Incubation Tray and Incubation device using the incubation tray", filed on July 10, 2023, the disclosure of which is hereby incorporated by reference in its entirety. No new matter has been introduced.

### TECHNICAL FIELD

The present disclosure belongs to the technical field of detection equipment and specifically relates to an incubation tray and an incubation device using the incubation tray.

### BACKGROUND

Chemiluminescent immunoassay has rapidly developed in recent years as a non-radioactive immunoassay technology. Its principle is to use chemiluminescent substances to amplify signals of samples and directly determine the immune binding process based on their luminescence intensity. This method has become one of the important trends in immunological detection.

At present, chemiluminescent immunoassay is generally performed by a light initiated chemiluminescent detector, which is provided with one or more incubation trays for placing reaction cups required for experiments. During use, the incubation tray rotates by a certain angle to move the reaction cup in the incubation tray to a sample suction port and a reagent suction port for a sample arm and a reagent arm to suck samples or reagents, and also to a detection port for a detection module to detect data.

The heating module of the existing incubation tray adopts bottom heating, leading to uneven temperature distribution within the incubation tray.

### SUMMARY

The present disclosure provides an incubation tray with uniform and stable heating and an incubation device using the incubation tray.

In the first aspect, the embodiment of the present disclosure provides an incubation tray, including: an incubation tray body, a reaction tray assembly, a lower temperature control component, a middle temperature control component, and a processing device. The incubation tray body includes an incubation chamber; the reaction tray assembly is configured to mount a reaction cup and disposed in the incubation chamber; the lower temperature control component is disposed in the incubation chamber and located at a bottom of the incubation tray body, configured to control an overall temperature of the incubation chamber; wherein the lower temperature control component includes a lower temperature sensor and a lower overheat protector; a middle temperature control component is disposed in the incubation chamber and located between the reaction tray assembly and the lower temperature control component, and the middle temperature control component is disposed adjacent to a lower portion of the reaction tray assembly, configured to control a temperature of the reaction cup mounted in the reaction tray assembly, wherein the middle temperature control component includes a middle temperature sensor and a middle overheat protector; and a processing device, connected to the lower temperature sensor and the lower overheat protector, and is configured to receive a temperature sensed by the lower temperature sensor and send a signal for cutting off a heating circuit to the lower overheat protector when the temperature reaches or exceeds a certain threshold; wherein the processing device is connected to the middle temperature sensor and the middle overheat protector, configured to receive a temperature sensed by the middle temperature sensor and send a signal for cutting off a heating circuit to the middle overheat protector when the temperature reaches or exceeds a certain threshold.

In one embodiment, the incubation tray further comprises an upper temperature control component disposed above the reaction tray assembly and configured to thermally isolate the incubation chamber from an external environment.

In one embodiment, the incubation tray further comprises a thermal insulation layer disposed on an outer side of the incubation tray body and wrapping an outer side surface of the incubation tray body; the incubation tray further comprises a cover plate, and a thermal insulation cover plate is disposed above the cover plate.

In one embodiment, the lower temperature control component comprises a lower heating sheet and a lower heat dissipation plate, the lower heating sheet is fixed to a bottom plate of the incubation tray body, the lower heat dissipation plate is pressed on the lower heating sheet, and the lower temperature sensor and the lower overheat protector are connected to the lower heat dissipation plate.

In one embodiment, the middle temperature control component comprises a middle heating sheet connected and fixed to a bottom end of the reaction tray assembly, and the middle temperature sensor and the middle overheat protector are fixed to the reaction tray assembly.

In one embodiment, the middle heating sheet is supported and fixed to the bottom plate of the incubation tray body via a plurality of support columns.

In one embodiment, the reaction tray assembly comprises a reaction turntable and a circumferential guide ring, an upper surface of the reaction turntable is provided with a plurality of radial sliding grooves extending along a radial direction, the circumferential guide ring comprises a plurality of concentric ring members, an annular guide groove for the reaction cup to move circumferentially is formed between adjacent concentric ring members, the circumferential guide ring is embedded into the reaction turntable from a bottom end of the reaction turntable, a spatial position where the radial sliding grooves intersect with the guide grooves is configured to arrange the reaction cup, and the middle temperature sensor and the middle overheat protector are connected and fixed to the circumferential guide ring.

In one embodiment, on a projection plane perpendicular to an axial direction of the circumferential guide ring, a projection of the middle heating sheet covers the circumferential guide ring and coincides with a projection of the circumferential guide ring; the lower heating sheet is located on an annular inner side of the circumferential guide ring, and an outer edge of the lower heating sheet overlaps an inner edge of the middle heating sheet.

In one embodiment, the incubation tray further comprises a cover plate, the upper temperature control component comprises an upper heating sheet disposed on the cover plate and located on an upper side of the cover plate, and a shape and size of the upper heating sheet corresponds to a shape and size of the cover plate; wherein the upper temperature control component further comprises an upper temperature sensor and an upper overheat protector, wherein the upper temperature sensor and the upper overheat protector are disposed on the cover plate; wherein the processing device is connected to the upper temperature sensor and the upper overheat protector, configured to receive a temperature sensed by the upper temperature sensor and send a signal for cutting off a heating circuit to the upper overheat protector when the temperature reaches or exceeds a certain threshold.

In a second aspect, an embodiment of the present disclosure provides an incubation device, comprising the incubation tray as described above.

In the embodiment of the present disclosure, the overall temperature of the entire incubation chamber is controlled within a predetermined temperature range by the lower temperature control component; the reaction cup containing reaction liquid are precisely temperature-controlled by the middle temperature control component; through the dual temperature control mechanism, the temperature in the incubation tray is uniform and stable, the best reaction effect of the reaction liquid is achieved, and the accuracy of detection results is higher.

It should be understood that the above-mentioned general description and the subsequent detailed description are only exemplary and explanatory and cannot limit the disclosure.

### BRIEF DESCRIPTION OF DRAWINGS

By describing the exemplary embodiments of the present disclosure in more detail with reference to the drawings, the above and other objectives, features and advantages of the present disclosure will become more apparent. In the exemplary embodiments of the present disclosure, the same reference numerals usually represent the same components.
FIG. 1 is an exploded schematic diagram of a structure of an incubation tray according to an embodiment of the present disclosure.
FIG. 2 is an exploded schematic diagram of a structure of a reaction tray assembly in an incubation tray in FIG. 1.
FIG. 3 is a cross-sectional schematic diagram of a reaction cup disposed in the incubation tray in FIG. 1.
FIG. 4 is an assembled schematic diagram of a structure of an incubation device according to an embodiment of the present disclosure.

### DETAILED DESCRIPTION

In order to make the objectives, technical solutions and advantages of the present disclosure clearer, the present disclosure will be further described in detail below with reference to the drawings and embodiments. It should be understood that the specific embodiments described herein are only used to explain the present disclosure and are not intended to limit the present disclosure.

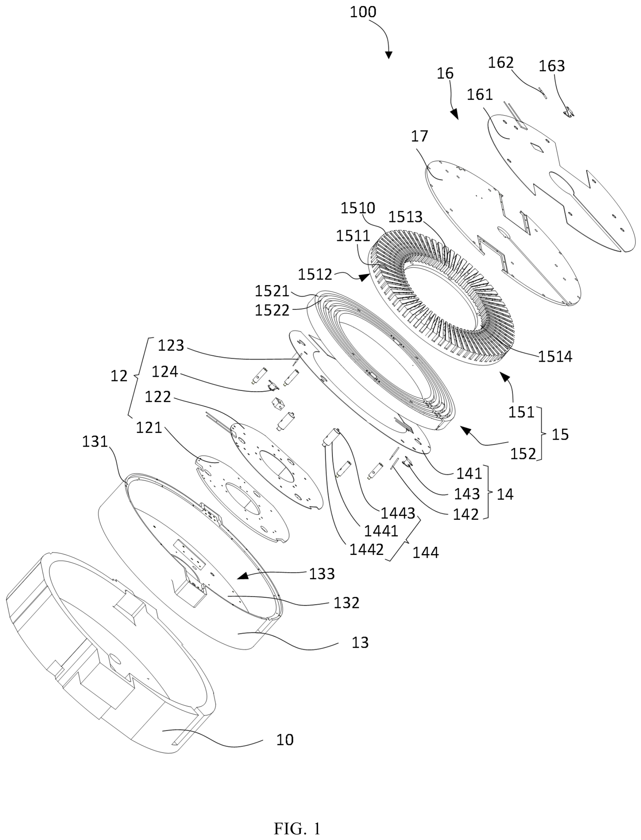

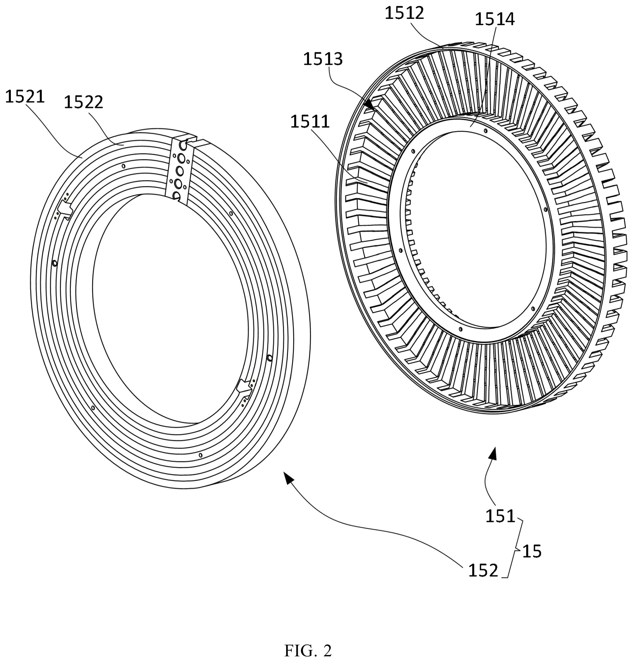

Please refer to Figs. 1 and 2 , the embodiment of the present disclosure provides an incubation tray 100, including: an incubation tray body 13, a reaction tray assembly 15, a lower temperature control component 12, and a middle temperature control component 14. The incubation tray body 13 includes an incubation chamber 133, and the reaction tray assembly 15, the lower temperature control component 12 and the middle temperature control component 14 are all disposed in the incubation chamber 133; the reaction tray assembly 15 is configured to mount reaction cups 20; the lower temperature control component 12 is disposed in the incubation chamber 133 and located at a bottom of the incubation tray body 13, configured to control the overall temperature of the incubation chamber 133; the middle temperature control component 14 is located between the reaction tray assembly 15 and the lower temperature control component 12, and the middle temperature control component 14 is disposed adjacent to the lower portion of the reaction tray assembly 15, configured to control the temperature of the reaction cup 20 mounted in the reaction tray assembly 15.

In this embodiment, the overall temperature of the incubation chamber 133 is controlled within a predetermined temperature range such as about 35 degrees Celsius, by the lower temperature control component 12; the reaction cup 20 containing reaction liquid are precisely temperature-controlled by the middle temperature control component 14; through the dual temperature control mechanism, the temperature in the incubation tray 100 is uniform and stable, the best reaction effect of the reaction liquid is achieved, and the accuracy of detection results is higher.

The incubation tray 100 further comprises an upper temperature control component 16, which is also disposed in the incubation chamber 133 and located above the reaction tray assembly 15, configured to thermally isolate the incubation chamber 133 from the external environment. The incubation tray 100 further comprises a thermal insulation layer 10 disposed on the outer side of the incubation tray body 13 and wrapping the outer side surface of the incubation tray body 13. The upper temperature control component 16 isolates the incubation chamber 133 from the external environment to prevent the influence of the external ambient temperature on the incubation chamber 133; the thermal insulation layer 10 can serve to effectively insulate the incubation chamber 133.

The thermal insulation layer 10 is cylindrical with a certain wall thickness, and the thermal insulation layer 10 is cylindrical in this embodiment. The thermal insulation layer 10 can be made of an opaque material with thermal insulation performance, to achieve a good thermal insulation effect and a light-shielding effect at the same time, avoiding affecting the sample analysis results.

The lower temperature control component 12 comprises a lower heating sheet 121, a lower heat dissipation plate 122, a lower temperature sensor 123 and a lower overheat protector 124. The lower heating sheet 121 is fixed in the incubation tray body 13.

In some embodiments, the incubation tray body 13 comprises a cylindrical side plate 131 and a bottom plate 132 connected to the bottom end of the cylindrical side plate 131, thereby defining the incubation chamber 133. The lower temperature control component 12 is disposed at the bottom of the incubation chamber 133; the lower heating sheet 121 is disposed in the incubation chamber 133 and fixed to the bottom plate 132 of the incubation tray body 13, the lower heat dissipation plate 122 is pressed on the lower heating sheet 121 and fixed to the bottom plate 132, and the lower heat dissipation plate 122 is configured to uniformly diffuse the heat generated by the lower heating plate 122 into the incubation chamber 133. The lower temperature sensor 123 and the lower overheat protector 124 are disposed in the incubation chamber 133. In this embodiment, the lower temperature sensor 123 and the lower overheat protector 124 are connected to the lower heat dissipation plate 122; the lower temperature sensor 123 is configured to sense the temperature of the incubation chamber 133 and transmit the sensed temperature signal to an external circuit, which can be displayed in real time via an external display device; the lower overheat protector 124 is connected to the switch circuit of the lower heating sheet 121; when the temperature sensed by the lower overheat protector 124 reaches or exceeds a threshold value, it will cut off the circuit, that is, disconnect the heating circuit of the lower heating sheet 121, thereby preventing incubation failure or damage to other components in the incubation tray 100 caused by excessive temperature in the incubation chamber 133.

In this embodiment, the lower heating sheet 121 is an electric heating plate that generates heat when energized. Preferably, the lower heating sheet 121 is disc-shaped and concentric with the bottom plate 132. The lower heat dissipation plate 122 is made of a material with high thermal conductivity, which can be an aluminum plate in this embodiment, and its surface can be a rough surface or formed with a plurality of microstructures to increase the diffusion area and improve the thermal diffusion efficiency. In an embodiment, a fan can be further disposed on the surface of the lower heat dissipation plate 122, and the heat of the lower heat dissipation plate 122 can be diffused to the incubation chamber 133 more quickly via the fan.

The middle temperature control component 14 comprises a middle heating sheet 141, a middle temperature sensor 142 and a middle overheat protector 143. The middle heating sheet 141 is supported and connected to the bottom plate 132 via a plurality of support columns 144. In some embodiments, one end of the support column 144 is fixed to the bottom plate 132, and another end is connected to the middle heating sheet 141; in this embodiment, the support column 144 comprises a support body 1441, and a first connection end 1442 and a second connection end 1443 connected to both ends of the support body 1441. The first connection end 1442 is configured to connect the bottom plate 132, and the connection method can be a fitting connection between a positioning pin and a positioning hole. For example, the first connection end 1442 is a positioning pin, and the bottom plate 132 includes a positioning hole for fitting, or the first connection end 1442 is set as a positioning hole, and a positioning pin is set on the bottom plate 132; preferably, the first connection end 1442 is a stud, which is fitted and fixed with the screw hole structure set on the bottom plate 132. Of course, the first connection end 1442 can also be a screw hole, which is fitted and fixed with the stud set on the bottom plate 132. In this embodiment, the second connection end 1442 is a positioning pin, which is fitted, positioned and connected with the positioning hole 145 provided on the heating sheet 141. In this embodiment, the number of support columns 144 is six, which are equally angularly distributed along the circumferential direction with the center of the heating sheet 141 as the center of the circle, so that the middle heating sheet 141 can be balanced and stably supported above the bottom plate 132.

The incubation tray 100 further comprises a reaction tray assembly 15, which comprises a reaction turntable 151 and a circumferential guide ring 152. The upper surface 1510 of the reaction turntable 151 is provided with a plurality of radial sliding grooves 1511 extending along its radial direction, and the plurality of radial sliding grooves 1511 penetrates the radially outer side surface and inner side surface of the reaction turntable 151. In this embodiment, the plurality of radial sliding grooves 1511 are equally angularly distributed along the circumferential direction of the reaction turntable 151; the lower surface 1512 of the reaction turntable 151 is provided with an annular receiving groove 1513, which is concentric with the reaction turntable 151 and communicates with the radial sliding grooves 1511. The annular receiving groove 1513 is configured to embed the circumferential guide ring 152 to receive the circumferential guide ring 152; an annular rotating connecting plate 1514 is disposed on the inner side of the reaction turntable 151, and the rotating connecting plate 1514 is configured to connect a central rotating shaft (not shown) to drive the reaction turntable 151 to rotate via the rotation of the central rotating shaft.

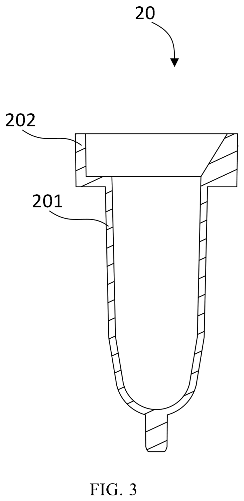

The circumferential guide ring 152 comprises a plurality of concentric ring members 1521; an annular guide groove 1522 for the reaction cup 20 to move in the circumferential direction is formed between adjacent concentric ring members 1521. The plurality of concentric ring members 1521 are connected and fixed via connecting ribs (not shown) disposed along their radial direction, and the connecting ribs are disposed at the bottom of the plurality of concentric ring members 1521. In this embodiment, the plurality of concentric ring members 1521 have the same height and their top ends and bottom ends are flush. The circumferential guide ring 152 is embedded into the annular receiving groove 1513 and its top end is adjacent to the upper surface 1510 of the reaction turntable 151. The spatial position where the radially extending radial sliding grooves 1511 intersect with the circumferentially extending guide grooves 1522 is configured to arrange the reaction cup 20. As shown in FIG. 3, the reaction cup 20 comprises a cup body 201 and a shoulder 202 disposed on the upper portion of the cup body 201 and protruding outward along the radial direction of the cup body 201. Generally, the shoulder 202 is a protruding structure surrounding the cup body 201 for a circle; and the width, i.e., the diameter, of the shoulder 202 is greater than the width of the radial sliding groove 1511, while the width of the cup body 201 is smaller than the widths of the radial sliding groove 1511 and the guide groove 1522, so that the cup body 201 is received in the radial sliding groove 1511 and the guide groove 1522, and the shoulder 202 is supported by the upper surface 1510 of the reaction turntable 151.

The middle heating sheet 141 is annular and connected and fixed to the bottom end of the reaction tray assembly 15, which is the bottom end of the circumferential guide ring 152 in this embodiment. That is to say, the circumferential guide ring 152 is fixed to the middle heating sheet 141; the heat emitted by the middle heating sheet 141 is dissipated into the guide grooves 1522 and the radial sliding grooves 1511 to control the temperature in the guide grooves 1522 at a predetermined temperature, such as about 35 degrees Celsius; since the cup body 202 is accommodated in the guide grooves 1522 and the radial sliding grooves 1511, the middle heating sheet 141 can heat the reaction cup 20 to heat the liquid in the reaction cup 20. The middle temperature sensor 142 and the middle overheat protector 143 are connected and fixed to the reaction tray assembly 15, which is the circumferential guide ring 152 in this embodiment. The middle temperature sensor 142 is configured to sense the temperature of the guide grooves 1522 and the radial sliding grooves 1511 and transmits the sensed temperature signal to an external circuit, which can be displayed in real time via an external display device; the middle overheat protector 143 is connected to the switch circuit of the middle heating sheet 121. When the temperature sensed by the middle overheat protector 143 reaches or exceeds a threshold value, it will cut off the circuit, that is, disconnect the heating circuit of the middle heating sheet 141, thereby preventing incubation failure caused by excessive heating temperature of the reaction cup 20, i.e., the temperature in the guide grooves 1522 and the radial sliding grooves 1511.

The upper temperature control component 16 comprises an upper heating sheet 161, an upper temperature sensor 162 and an upper overheat protector 163. The incubation tray 100 further comprises a cover plate 17; the upper heating sheet 161 is disposed on the cover plate 17 and located on a side of the cover plate 17 away from the circumferential guide ring 151 of the reaction tray; both the upper temperature sensor 162 and the upper overheat protector 163 are disposed on the cover plate 17.

The upper heating sheet 161 is also an electric heating sheet; when energized to generate heat, the heat is transferred to the cover plate 17, and the cover plate 17 transfers the heat to the upper space of the incubation chamber 133, thereby thermally isolating the incubation chamber 133 from the outside world and preventing the influence of abnormal external temperature on the incubation chamber 133. In this embodiment, the cover plate 17 is an aluminum plate with high thermal conductivity, which can well conduct heat. The shape and size of the upper heating sheet 161 are the same as those of the cover plate 17, so that the upper heating sheet 161 can be well attached to the cover plate 17, and at the same time, the heat generated by the upper heating sheet 161 can be better transferred to the cover plate 17.

In this embodiment, on a projection plane perpendicular to the axial direction of the circumferential guide ring 152, the projection of the middle heating sheet 141 covers the circumferential guide ring 152 and coincides with the projection of the circumferential guide ring 152; the lower heating sheet 121 is located on the annular inner side of the circumferential guide ring 152, and preferably, the outer edge of the lower heating sheet 121 overlaps the inner edge of the middle heating sheet 141. The lower heating sheet 121 is also annular in shape, and its annular inner side is used for the central rotating shaft to pass through.

It can be understood that a thermal insulation cover plate (not shown) can also be disposed above the cover plate 17; the outer contour shape of the thermal insulation cover plate can be the same as that of the cover plate 17, so as to achieve thermal insulation at the top of the incubation tray 100; the combined structure of the thermal insulation layer 10 and the thermal insulation cover plate constitutes a complete thermal insulation structure of the incubation tray 100.

In this embodiment, the incubation tray 100 further comprises a processing device (not shown), which is connected to the lower temperature sensor 123, the lower overheat protector 124, the middle temperature sensor 142 and the middle overheat protector 143. When the processing device receives that the temperature sensed by the lower temperature sensor 123 reaches or exceeds a certain threshold, it sends a signal for cutting off the heating circuit to the lower overheat protector 124, and the lower overheat protector 124 disconnects the heating circuit of the lower heating sheet 121; similarly, when the processing device receives that the temperature sensed by the middle temperature sensor 142 reaches or exceeds a certain threshold, it sends a signal for cutting off the heating circuit to the middle overheat protector 143, and the middle overheat protector 143 disconnects the heating circuit of the lower heating sheet 141. Further, the processing device is connected to the upper temperature sensor 162 and the upper overheat protector 163; when the processing device receives that the temperature sensed by the upper temperature sensor 162 reaches or exceeds a certain threshold, it sends a signal for cutting off the heating circuit to the upper overheat protector 163, and the upper overheat protector 163 disconnects the heating circuit of the upper heating sheet 161.

In this embodiment, the overall temperature of the incubation chamber 133 is controlled within a predetermined temperature range by the lower temperature control component 12, the reaction cup 20 containing reaction liquid are precisely temperature-controlled by the middle temperature control component 14, the incubation chamber 133 is isolated from the external ambient temperature by the upper temperature control component 16, and coupled with the effect of the thermal insulation layer 10, the reaction cup 20 in the incubation chamber not only have precise control of the reaction temperature, but also effectively ensure the overall temperature of the internal environment of the incubation chamber 133 and isolate the influence of the external ambient temperature, so that the temperature in the incubation tray 100 is uniform and stable, the best reaction effect of the reaction liquid is achieved, and the accuracy of detection results is higher.

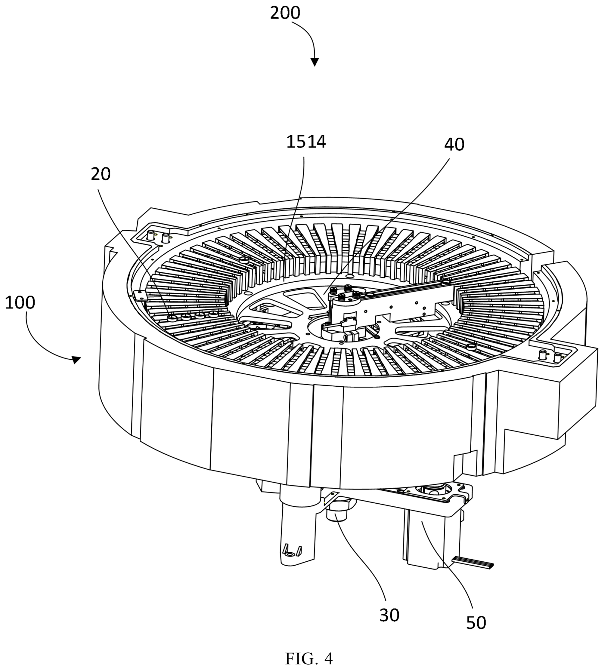

Please refer to FIG. 4, a second embodiment of the present disclosure provides an incubation device 200, comprising the incubation tray 100 as described in the first embodiment and a central rotating shaft 30; the rotating connecting plate 1514 of the reaction turntable 151 is connected to the central rotating shaft 30 via a rotating adapter 40; the rotating adapter 40 is an annular plate structure connected to the inner side of the rotating adapter plate 1514, and the rotating adapter 40 is fixedly connected to the central rotating shaft 30. The central rotating shaft 30 rotates around its central axis under the drive of a drive motor 50, and the reaction turntable 151 rotates around the central axis of the central rotating shaft 30 under the drive of the central rotating shaft 30. A plurality of reaction cups 20 containing samples and reagents are in the reaction tray assembly 15 and rotate with the rotation of the reaction turntable 151. It should be noted that, in order to more clearly describe the incubation device 200 in this embodiment, the structure drawing of the upper temperature control component 16 and the cover plate 17 are omitted in FIG. 4.

The incubation device 200 in this embodiment adopts the incubation tray 100 of the first embodiment. The reaction cup 20 rotate with the reaction turntable 151; during the incubation process of the samples and reagents in the reaction cup 20, the overall temperature of the incubation chamber 133 is controlled within a predetermined temperature range by the lower temperature control component 12, the reaction cup 20 containing reaction liquid are precisely temperature-controlled by the middle temperature control component 14, the incubation chamber 133 is isolated from the external ambient temperature by the upper temperature control component 16, and coupled with the effect of the thermal insulation layer 10, the temperature in the incubation tray 100 can be effectively ensured to be uniform and stable, the best reaction effect of the reaction liquid is achieved, and the accuracy of detection results is higher.

In the drawings of this embodiment, the same or similar reference numerals correspond to the same or similar components; in the description of the present disclosure, it should be understood that if there are terms such as "upper", "lower", "left", "right" indicating orientations or positional relationships, they are based on the orientations or positional relationships shown in the drawings, which are only for the convenience of describing the present disclosure and simplifying the description, rather than indicating or implying that the referred device or element must have a specific orientation, be constructed and operated in a specific orientation. Therefore, the terms describing positional relationships in the drawings are only for exemplary illustration and cannot be understood as limitations on this patent. For those of ordinary skill in the art, the specific meanings of the above terms can be understood according to specific situations. The above descriptions are only preferred embodiments of the present disclosure and are not intended to limit the present disclosure; any modifications, equivalent replacements and improvements made within the spirit and principles of the present disclosure shall be included in the protection scope of the present disclosure.

## Claims

1. An incubation tray (100), comprising:
an incubation tray body (13) including an incubation chamber (133);
a reaction tray assembly (15) configured to mount a reaction cup (20) and disposed in the incubation chamber (133);
a lower temperature control component (12) disposed in the incubation chamber (133) and located at a bottom of the incubation tray body, configured to control an overall temperature of the incubation chamber (133), wherein the lower temperature control component (12) includes a lower temperature sensor (123) and a lower overheat protector (124);
a middle temperature control component (14) disposed in the incubation chamber (133) and located between the reaction tray assembly (15) and the lower temperature control component (12), and the middle temperature control component (14) is disposed adjacent to a lower portion of the reaction tray assembly (15), configured to control a temperature of the reaction cup (20) mounted in the reaction tray assembly (15), wherein the middle temperature control component (14) includes a middle temperature sensor (142) and a middle overheat protector (143); and
a processing device, connected to the lower temperature sensor (123) and the lower overheat protector (124), and configured to receive a temperature sensed by the lower temperature sensor (123) and send a signal for cutting off a heating circuit to the lower overheat protector (124) when the temperature reaches or exceeds a certain threshold; wherein the processing device is connected to the middle temperature sensor (142) and the middle overheat protector (143), configured to receive a temperature sensed by the middle temperature sensor (142) and send a signal for cutting off a heating circuit to the middle overheat protector (143) when the temperature reaches or exceeds a certain threshold.

2. The incubation tray (100) according to claim 1, further comprising: an upper temperature control component (16) disposed above the reaction tray assembly (15) and configured to thermally isolate the incubation chamber (133) from an external environment.

3. The incubation tray (100) according to claim 1, further comprising: a thermal insulation layer (10) disposed on an outer side of the incubation tray body (13) and wrapping an outer side surface of the incubation tray body (13); the incubation tray (100) further comprises a cover plate (17), and a thermal insulation cover plate is disposed above the cover plate (17).

4. The incubation tray (100) according to claim 1, wherein the lower temperature control component (12) comprises a lower heating sheet (121) and a lower heat dissipation plate (122), the lower heating sheet (121) is fixed to a bottom plate (132) of the incubation tray body (13), the lower heat dissipation plate (122) is pressed on the lower heating sheet (121), and the lower temperature sensor (123) and the lower overheat protector (124) are connected to the lower heat dissipation plate (122).

5. The incubation tray (100) according to claim 4, wherein the middle temperature control component (14) comprises a middle heating sheet (141) connected and fixed to a bottom end of the reaction tray assembly (15), and the middle temperature sensor (142) and the middle overheat protector (143) are fixed to the reaction tray assembly (15).

6. The incubation tray (100) according to claim 5, wherein the middle heating sheet (141) is supported and fixed to the bottom plate (132) of the incubation tray body (13) via a plurality of support columns (144).

7. The incubation tray (100) according to claim 5, wherein the reaction tray assembly (15) comprises a reaction turntable (151) and a circumferential guide ring (152), an upper surface of the reaction turntable (151) is provided with a plurality of radial sliding grooves (1511) extending along a radial direction, the circumferential guide ring (152) comprises a plurality of concentric ring members (1521), an annular guide groove (1522) for the reaction cup (20) to move circumferentially is formed between adjacent concentric ring members (1521), the circumferential guide ring (152) is embedded into the reaction turntable (151) from a bottom end of the reaction turntable (151), a spatial position where the radial sliding grooves (1511) intersect with the guide grooves (1522) is configured to arrange the reaction cup (20), and the middle temperature sensor (142) and the middle overheat protector (143) are connected and fixed to the circumferential guide ring (152).

8. The incubation tray (100) according to claim 7, wherein, on a projection plane perpendicular to an axial direction of the circumferential guide ring (152), a projection of the middle heating sheet (141) covers the circumferential guide ring (152) and coincides with a projection of the circumferential guide ring (152); the lower heating sheet (121) is located on an annular inner side of the circumferential guide ring (152), and an outer edge of the lower heating sheet (121) overlaps an inner edge of the middle heating sheet (141).

9. The incubation tray (100) according to claim 2, further comprising: a cover plate (17), the upper temperature control component (16) comprises an upper heating sheet (161) disposed on the cover plate (17) and located on an upper side of the cover plate (17), and a shape and size of the upper heating sheet (161) corresponds to a shape and size of the cover plate (17);
wherein the upper temperature control component (16) further comprises an upper temperature sensor (162) and an upper overheat protector (163), wherein the upper temperature sensor (162) and the upper overheat protector (163) are disposed on the cover plate (17);
wherein the processing device is connected to the upper temperature sensor (162) and the upper overheat protector (163), configured to receive a temperature sensed by the upper temperature sensor (162) and send a signal for cutting off a heating circuit to the upper overheat protector (163) when the temperature reaches or exceeds a certain threshold.

10. An incubation device (200), comprising the incubation tray (100) according to any one of claims 1 to 9.
